# FASCICULE DE BREVET EUROPEEN

(11) **EP 1 696 217 B1**
(45) Date de publication et mention de la délivrance du brevet: **27.10.2010**
(21) Numéro de dépôt: 06290267.1
(22) Date de dépôt: 16.02.2006
(51) Int. Cl.: G01L 5/10, F16H 7/12

(54) **Dispositif de galet tendeur de courroie instrumenté et procédé de contrôle associé**
Riemenspannrollenvorrichtung mit einem Messgerät und zugehöriges Prüfungsverfahren
Belt tensioning idler pulley device with measuring means and associated method of testing

(30) Priorité: 28.02.2005 FR 0502005
(43) Date de publication de la demande: 30.08.2006
(73) Titulaire: Aktiebolaget SKF, 415 50 Göteborg (SE)
(72) Inventeur: Landriève, Franck, 37230 Fondettes (FR)
(74) Mandataire: Casalonga, Axel

(56) Documents cités:
- EP-A- 1 158 287
- WO-A-03/042577
- DE-A1- 3 534 462
- FR-A- 2 832 200
- US-A- 5 780 731
- PATENT ABSTRACTS OF JAPAN vol. 2002, no. 02, 2 avril 2002 (2002-04-02) & JP 2001 289291 A (NTN CORP), 19 octobre 2001 (2001-10-19)
- PATENT ABSTRACTS OF JAPAN vol. 1997, no. 07, 31 juillet 1997 (1997-07-31) & JP 09 072394 A (NIPPON SOKEN INC; DENSO CORP), 18 mars 1997 (1997-03-18)
- PATENT ABSTRACTS OF JAPAN vol. 1998, no. 06, 30 avril 1998 (1998-04-30) & JP 10 030693 A (NIPPON SOKEN INC), 3 février 1998 (1998-02-03)

## Description

La présente invention concerne le domaine des dispositifs de galets tendeurs de courroie automatiques, notamment utilisés pour assurer une tension adéquate de courroies, par exemple des courroies de distribution de moteurs thermiques à combustion interne de véhicule automobile.

Un dispositif de galet tendeur de courroie comprend généralement un support destiné à être fixé sur le bloc moteur, et une partie mobile pouvant se déplacer angulairement par rapport au support. Ladite partie mobile est pourvue d'un excentrique et d'un roulement sur lequel est monté un galet destiné à être amené en contact avec la courroie. Un ressort exerce un effort de tension permanent entre le support et la partie mobile, provoquant la mise en contact du galet avec la courroie, avec une tension adéquate de la courroie. La partie mobile est montée sur le support avec une possibilité de réglage afin de pouvoir adapter l'effort de tension de la courroie. Pour plus de détails, on peut se référer aux documents FR-A-2 744 506 et FR-A-2 668 567.

Le dispositif de galet tendeur permet ainsi d'assurer le maintien de la tension requise de la courroie dans une certaine plage de tolérance, et ce, malgré les variations dimensionnelles de la courroie pouvant être générées par usure ou encore par variations de température.

La défaillance d'une courroie, en particulier d'une courroie de distribution de moteur thermique de véhicule automobile peut générer d'importants dégâts audit moteur, et en altérer ainsi la sûreté de fonctionnement.

A cet effet, on connaît, par le document US-A-6 666 784, un dispositif de galet tendeur de courroie pourvu d'un support fixe monté sur un bloc moteur, d'un excentrique mobile angulairement par rapport audit support, et d'un élément d'amortissement disposé au niveau du support fixe. A l'intérieur de l'élément d'amortissement est monté un dispositif de détection d'usure de la courroie muni d'au moins un aimant fixé sur un élément mobile de l'élément d'amortissement et d'un capteur apte à détecter la position linéaire de l'élément mobile, ladite position linéaire étant liée à la position angulaire de l'excentrique par rapport au support fixe.

Le dispositif présente l'inconvénient de comporter un nombre relativement important d'éléments intermédiaires qui interviennent dans la chaîne cinématique entre l'élément mobile et la courroie, ceci pouvant générer certaines imprécisions au niveau des mesures effectuées.

La demanderesse a également mis au point un dispositif de galet tendeur de courroie, ce qui a fait l'objet d'une demande de brevet français FR 2832201. Le dispositif de galet tendeur est pourvu d'un support fixe, d'un excentrique de travail mobile angulairement par rapport au support fixe, d'un élément codeur monté sur l'excentrique et comprenant un anneau de codage multipolaire, d'un élément capteur monté sur le support fixe et apte à coopérer avec ledit élément codeur pour mesurer le déplacement angulaire de l'excentrique de travail, et d'un module de traitement des signaux émis par l'élément capteur apte à déterminer une information d'usure de la courroie.

Un tel dispositif de galet tendeur, bien qu'étant particulièrement précis et efficace pour détecter des déplacements et oscillations angulaires de l'excentrique par rapport au support fixe, présente l'inconvénient de comprendre des éléments de détection trop coûteux pour une simple mesure de seuil d'usure d'une courroie, pouvant être incompatibles avec une industrialisation en grande série de dispositifs de galets tendeurs.

En outre, ce dispositif n'est pas adaptable à un galet tendeur à déplacement linéaire droit n'utilisant pas d'excentrique.

La présente invention a donc pour but de remédier à ces inconvénients en proposant un dispositif de galet tendeur de courroie apte à détecter la tension d'une courroie afin d'en déduire une limite d'usure prédéterminée de manière particulièrement simple, précise, fiable et économique.

A cet effet, le dispositif de galet tendeur de courroie est pourvu d'un support fixe apte à assurer le maintien du dispositif sur un bloc moteur, d'un équipage mobile par rapport au support fixe, d'un galet supporté par l'équipage mobile et destiné à être en contact avec la courroie, et d'un organe apte à exercer un effort permanent entre le support fixe et l'équipage mobile.

Selon un aspect de l'invention, le galet tournant comprend un élément cible et le support fixe comprend au moins un élément capteur monté en regard de l'élément cible du galet avec un entrefer et coopérant magnétiquement avec ledit élément cible pour la détection de l'usure de la courroie en fonction d'un déplacement du galet tournant par rapport au support fixe.

Un tel dispositif présente l'avantage de permettre une détection de l'usure de la courroie directement à partir d'un déplacement de la partie tournante du dispositif de galet tendeur qui est en contact avec la courroie et maintient la tension sur cette dernière.

En d'autres termes, la disposition d'un élément cible directement sur le galet tournant permet d'effectuer des mesures particulièrement précises et fiables, l'usure de la courroie étant directement liée au déplacement du galet tournant entraîné par la courroie par rapport au support fixe.

Par ailleurs, la disposition de l'élément capteur au niveau du support fixe facilite non seulement le montage du dispositif, mais permet également, lors d'une éventuelle défaillance de l'élément capteur, de simplifier l'intervention nécessaire en ne nécessitant pas d'opération au niveau de l'équipage mobile.

Préférentiellement, le support fixe comprend, en outre, au moins un élément magnétique apte à créer un champ magnétique à proximité de l'élément capteur, ledit élément magnétique coopérant avec l'élément cible du galet pour modifier la valeur du champ magnétique en fonction du déplacement du galet par rapport au support fixe.

L'association d'un élément capteur à un élément magnétique apte à créer un champ magnétique à proximité dudit élément capteur pour déterminer l'usure de la courroie permet l'obtention de mesures particulièrement précises, et ce, de manière économique.

Avantageusement, l'entrefer est variable en fonction du déplacement du galet par rapport au support fixe. L'entrefer peut être radial ou axial.

Dans un mode de réalisation, le support fixe comprend deux éléments capteurs disposés radialement de part et d'autre de l'élément cible du galet, les éléments capteurs étant reliés électriquement de manière à effectuer une mesure différentielle des signaux fournis par les éléments capteurs.

Un tel dispositif de galet tendeur instrumenté permet d'obtenir une détection particulièrement fiable de l'état d'usure de la courroie en s'affranchissant notamment d'éventuelles variations dimensionnelles dues à des variations thermiques, des variations des propriétés de l'élément cible, ou encore des variations de la tension d'alimentation des éléments capteurs.

Avantageusement, l'élément capteur détecte l'usure de la courroie en fonction d'un déplacement linéaire radial de l'équipage mobile par rapport au support fixe.

De préférence, l'équipage mobile comprend un excentrique de travail mobile angulairement par rapport au support fixe et supportant le galet, l'élément capteur détectant l'usure de la courroie en fonction de la position du galet par rapport au support fixe.

Le support fixe peut comprendre une plaque sur laquelle est monté l'élément capteur.

Préférentiellement, l'élément cible comprend un matériau ferromagnétique.

Avantageusement, une portion d'extrémité du galet tournant forme l'élément cible. Une telle disposition permet l'obtention d'un dispositif de galet tendeur instrumenté particulièrement compact axialement. En outre, une portion du galet formant l'élément cible, il n'est pas nécessaire de prévoir un élément additionnel engendrant un surcoût pour réaliser la mesure de la tension de la courroie.

L'élément cible peut être rapporté ou monobloc avec l'excentrique de travail.

Dans un mode de réalisation, l'élément cible comprend un matériau synthétique chargé de poudre de ferrite magnétisée.

Avantageusement, le dispositif comprend un bloc capteur, monté sur le support fixe, et à l'intérieur duquel est noyé l'élément magnétique et logé au moins en partie l'élément capteur.

La disposition de l'élément magnétique noyé à l'intérieur du bloc capteur permet d'éviter une éventuelle infiltration d'éléments extérieurs, par exemple métalliques, à proximité de sa surface extérieure et pouvant générer une variation du champ émis. La détection de la tension de la courroie est ainsi particulièrement précise.

L'élément capteur peut comprendre une cellule magnéto-sensible, linéaire ou digitale. L'utilisation d'un tel élément capteur permet d'obtenir un dispositif de conception particulièrement simple et économique.

En outre, l'utilisation d'une cellule magnéto-sensible par rapport à des capteurs dits « incrémentaux », permet une grande fiabilité des mesures. En effet, les capteurs incrémentaux présentent l'inconvénient de ne pouvoir détecter la position réelle d'un élément par rapport à un autre élément fixe lorsqu'une mémoire électronique associée n'est plus alimentée électriquement.

L'invention concerne également un procédé de contrôle de l'usure d'une courroie, comprenant les étapes au cours desquelles on exerce un effort de tension permanent entre un support fixe et un équipage mobile par rapport au support fixe et en contact avec la courroie, caractérisé en ce qu'on détecte l'usure de la courroie directement en fonction d'un déplacement du galet par rapport au support fixe. Le déplacement est détecté par coopération d'éléments capteurs et cibles montés en regard l'un par rapport à l'autre avec un entrefer, ledit déplacement étant linéaire et fonction de la position du galet par rapport au support fixe.

La présente invention sera mieux comprise à la lecture de la description détaillée de modes de réalisation pris à titre d'exemples nullement limitatifs et illustrés par les dessins annexés, sur lesquels :
- la figure 1 est une vue en coupe axiale d'un dispositif de galet tendeur de courroie selon un premier mode de réalisation de l'invention ;
- la figure 2 est une vue de détail du dispositif de la figure 1 ;
- la figure 3 est une vue en coupe axiale d'un dispositif de galet tendeur selon un deuxième mode de réalisation de l'invention ;
- la figure 4 est une vue schématique d'une unité de traitement d'éléments capteurs du dispositif de la figure 3 ;
- la figure 5 est une vue en coupe axiale d'un dispositif de galet tendeur selon un troisième mode de réalisation de l'invention ;
- la figure 6 est une vue en coupe axiale d'un dispositif de galet tendeur selon un quatrième mode de réalisation de l'invention ;
- la figure 7 est une vue en coupe axiale d'un dispositif de galet tendeur selon un cinquième mode de réalisation de l'invention .

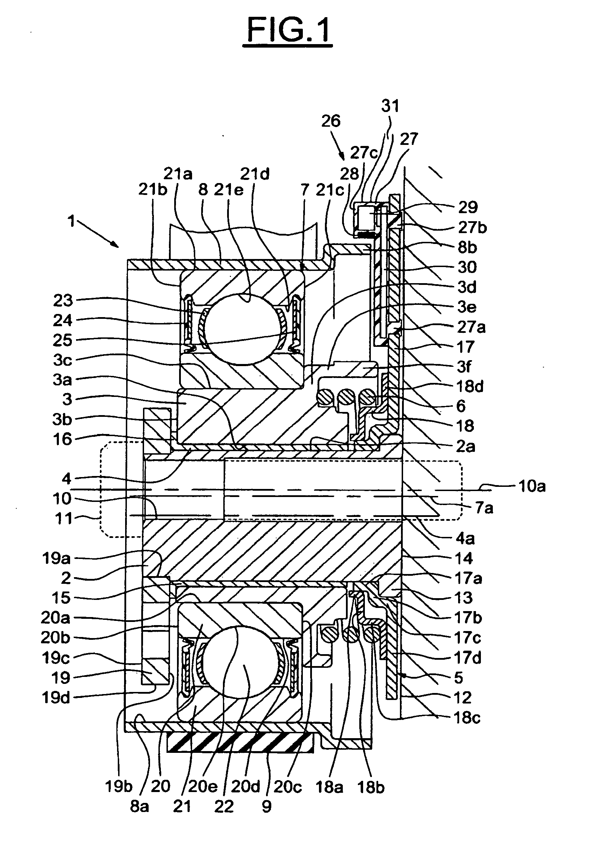

Comme on peut le voir sur la figure 1, le dispositif de galet tendeur, référencé 1 dans son ensemble, comprend un équipage fixe pourvu d'un excentrique de réglage 2, et un équipage mobile monté pivotant sur l'équipage fixe et pourvu d'un excentrique de travail 3. Un coussinet formant palier lisse 4 est monté rigidement par serrage dans l'excentrique de travail 3. Un actionneur comprenant un ressort 6 est monté entre ledit excentrique de travail 3 et un support fixe 5 comprenant l'excentrique de réglage 2, un galet ou poulie 8 étant monté à rotation sur l'excentrique de travail par l'intermédiaire d'un roulement 7, ledit galet 8 venant en appui sur une courroie 9.

L'excentrique de réglage 2, de forme générale cylindrique, comprend un alésage 10, d'axe 10a, décalé vers l'extérieur par rapport à l'axe géométrique dudit excentrique. L'alésage 10 permet le passage d'un organe de fixation tel qu'une vis 11, représenté en pointillé, pour fixer ledit excentrique de réglage 2 sur un bloc moteur 12. L'excentrique de réglage 2 peut ainsi pivoter angulairement par rapport au bloc moteur 12 lorsque la vis 11 est desserrée, le vissage de ladite vis 11 provoquant l'immobilisation de l'excentrique de réglage 2 sur ledit bloc. L'excentrique de réglage 2 comprend, à une extrémité axiale, une collerette 13 radiale dirigée radialement vers l'extérieur. La collerette 13 prolonge sensiblement radialement une surface radiale d'appui 14 de l'excentrique de réglage 2 sur le bloc moteur 12 de manière à accroître la surface d'appui dudit excentrique de réglage 2 sur le bloc moteur 12.

Le palier lisse 4, d'axe 4a, se présente sous la forme d'une douille annulaire comprenant une portion axiale 15, fixée par emmanchement serré dans un alésage 3a de l'excentrique de travail 3, et apte à glisser sur la surface cylindrique extérieure 2a de l'excentrique de réglage 2. La portion axiale 15 est prolongée, à une extrémité axiale, du côté opposé à la collerette 13, par une portion radiale 16 dirigée vers l'extérieur. La portion radiale 16 est en appui contre une surface frontale radiale de l'excentrique de travail 3.

Le support fixe 5 comprend également une plaque de base 17 munie d'une portion axiale 17a de guidage, de forme tubulaire, présentant ici une faible dimension axiale et définissant un alésage venant en contact avec la surface extérieure 2a de l'excentrique de réglage 2. La portion axiale 17a est prolongée vers l'extérieur, à partir d'une extrémité axiale, du côté de la collerette 13, par une portion radiale 17b en appui contre ladite collerette 13. La portion radiale 17b est prolongée axialement, à partir d'une zone de plus grand diamètre, du côté opposé à la portion axiale 17a, par une portion axiale 17c qui se prolonge radialement vers l'extérieur, à partir de son extrémité libre, par une portion radiale 17d située axialement sensiblement au niveau de la collerette 13. La portion radiale 17d s'étend radialement vers l'extérieur, une extrémité étant située radialement entre l'excentrique de réglage 2 et le galet 8, une extrémité opposée étant décalée radialement vers l'extérieur par rapport audit galet 8. La plaque de base 17 est immobilisée par rapport au bloc moteur 12, par exemple à l'aide d'une goupille fixée sur le bloc moteur 12 et venant en saillie à travers un espace ménagé dans l'épaisseur de la plaque de base 17. Avantageusement, la plaque de base 17 est réalisée par découpe, emboutissage et pliage, à partir d'un flanc en tôle d'acier d'épaisseur mince.

Le support 5 comprend également une plaque intermédiaire 18 sensiblement en concordance de forme avec la plaque de base 17. La plaque intermédiaire 18 est emboîtée axialement et centrée sur ladite plaque de base 17, du côté de l'excentrique de réglage 2. La plaque intermédiaire 18, avantageusement réalisée en tôle d'acier, comprend une portion axiale 18a, de forme tubulaire, définissant un alésage venant en contact avec la surface extérieure de la portion axiale 17a de la plaque de base 17. La portion axiale 18a est prolongée vers l'extérieur, à partir d'une extrémité axiale, par une portion radiale 18b qui se prolonge à partir d'une zone de plus grand diamètre, du côté opposé à la portion axiale 18a, par une portion axiale 18c. La portion axiale 18c se prolonge à partir de son extrémité libre, par une portion radiale 18d en contact avec la portion radiale 17d de la plaque de base 17. Les portions axiales 18a, 18c et les portions radiales 18b, 18d de la plaque intermédiaire 18 sont monoblocs.

L'excentrique de travail 3 comprend une surface radiale 3b disposée axialement à l'opposé de la plaque de base 17, une surface extérieure cylindrique 3c s'étendant sur la majeure partie de sa longueur à partir de la surface radiale frontale 3b, une portion radiale 3d s'étendant vers l'extérieur à partir de l'extrémité de la surface extérieure cylindrique 3c, et une portion axiale 3e s'étendant à partir de l'extrémité libre de la portion radiale 3d, axialement à l'opposé de la surface radiale frontale 3b. L'excentrique de travail 3 est prolongé localement, au niveau de la portion axiale 3e, par une extension axiale 3f s'étendant axialement en direction de la plaque de base 17. L'extension axiale 3f présente ici des dimensions axiale et radiale sensiblement supérieures à celles de la portion axiale 3e. L'extension axiale 3f peut par exemple s'étendre angulairement entre 30 et 40°.

La surface radiale 3b, la portion radiale 3d, la portion axiale 3e et l'extension axiale 3f de l'excentrique 3 sont monoblocs.

La portion radiale 3d, la portion axiale 3e, et la portion radiale 18d de la plaque intermédiaire 18 définissent un logement dans lequel est disposé le ressort 6. Une extrémité du ressort 6 est accrochée sur la plaque de base 17, l'autre extrémité étant solidaire de l'excentrique de travail 3. Ainsi, l'excentrique de travail 3 peut tourner autour de l'axe 4a, par rapport à l'excentrique de réglage 2, tout en étant soumis à un couple de rappel exercé par ledit ressort 6.

Un organe d'arrêt axial se présentant sous la forme d'une bague 19 comprend une surface 19a intérieure, montée par exemple par sertissage sur une surface extérieure cylindrique 2a de l'excentrique de réglage 2, à une extrémité axiale du côté opposé à la collerette 13, délimité par deux surface radiales 19b et 19c, et une surface extérieure cylindrique 19d. La surface radiale 19b forme une surface d'arrêt axiale pour l'excentrique de réglage 3 venant en appui sur ladite surface 19b, par l'intermédiaire de la portion axiale 16 du palier 4. Les surfaces 19a et 2a présentent une complémentarité de forme et sont aptes à assurer une liaison angulaire entre la bague 19 et l'excentrique de réglage 2. La bague 19 peut ainsi permettre le réglage angulaire de l'excentrique de réglage 2 avant le serrage de la vis 11.

Le roulement 7 à gorges profondes d'axe 7a, présente un faible coût de fabrication, et comprend une bague intérieure 20, une bague extérieure 21, entre lesquelles sont logés une rangée d'éléments roulants 22 réalisés ici sous forme de billes, une cage 23 de maintien de l'espace circonférentiel des éléments roulants 22, et deux joints d'étanchéité 24 et 25.

La bague intérieure 20 est de type massif. On entend par « bague de type massif », une bague dont la forme est obtenue par usinage avec enlèvement de copeaux (tournage, rectification) à partir de tubes, de barres, d'ébauches forgées et/ou roulées. La bague intérieure 20 comprend un alésage 20a de forme cylindrique, en contact avec la surface extérieure 3c de l'excentrique de réglage 3, et délimité par deux surfaces latérales radiales 20b et 20c opposées, la surface radiale 20c étant en contact avec la portion radiale 3d, et une surface cylindrique extérieure 20d à partir de laquelle est formée une gorge circulaire 20e présentant en section droite un profil interne concave apte à former un chemin de roulement pour les éléments roulants 22, ladite gorge étant orientée vers l'extérieur.

La bague extérieure 21, également de type massif, comprend une surface cylindrique extérieure 21 a délimitée par des surfaces frontales 21b et 21c, et un alésage 21d de forme cylindrique à partir duquel est formée une gorge circulaire 21e présentant en section droite un profil interne concave apte à former un chemin de roulement pour les éléments roulants 22, orientée vers l'intérieur. L'alésage 21d comprend ici deux rainures annulaires (non référencées) symétriques entre elles par rapport à un plan passant par le centre des éléments roulants 22. A l'intérieur desdites rainures sont montés les joints d'étanchéité 24 et 25, venant à proximité de portions de la surface extérieure cylindrique 20d de la bague intérieure 20 formant des passages étroits. Les joints d'étanchéité 24, 25 sont disposés radialement entre les bagues intérieure et extérieure 20, 21. Le joint d'étanchéité 24 est monté axialement entre les éléments roulants 22 et les surfaces radiales 20b et 21b des bagues 20 et 21, le joint d'étanchéité 25 étant monté axialement entre les éléments roulants 21 et les surfaces radiales 20c, 21 c desdites bagues.

Le galet 8 comprend un alésage étagé 8a monté par emmanchement sur la surface cylindrique extérieure 21 a de la bague extérieure 21 du roulement 7. Le roulement 7 assure ainsi la liberté de rotation du galet 8 par rapport à l'excentrique de travail 3, et la reprise des efforts radiaux.

Le dispositif 1 comprend également un bloc capteur 26 pourvu d'un support 27 fixé au niveau de la plaque de base 17 du support fixe 5, axialement du côté du galet 8, par l'intermédiaire de plots de fixation 27a, 27b. Le plot de fixation 27a est situé radialement entre l'excentrique de travail 3 et le galet 8, au voisinage dudit excentrique 3. Le plot de fixation 27b est décalé radialement vers l'extérieur par rapport au galet 8. Les plots 27a, 27b sont situés chacun au voisinage d'une extrémité radiale du support 27. Le support 27 comprend également une extension 27c axiale, s'étendant axialement en direction de la courroie 9 de manière à être montée avec un faible entrefer radial avec le galet 8. Les plots de fixation 27a, 27b et l'extension 27c sont monoblocs avec le support 27, par exemple réalisé en matériau synthétique.

Le bloc capteur 26 comprend également un élément capteur 28 et un élément magnétique 29, montés respectivement semi-noyé et noyé à l'intérieur de l'extension 27c du support 27. L'élément capteur 28, par exemple une cellule magnéto-sensible, affleure avec une surface cylindrique de petit diamètre de l'extension 27c du support 27, de manière à être monté en regard d'une extrémité axiale du galet 8, du côté extérieur. L'élément capteur 28 est ainsi monté avec un faible entrefer radial par rapport au galet 8, favorisant la compacité du dispositif 1.

L'élément magnétique 29 peut par exemple comprendre un aimant permanent pourvu de deux pôles magnétiques de polarités opposées, « nord » et « sud », s'étendant axialement à l'intérieur du support 27, de manière qu'un des pôles soit orienté en direction de l'élément capteur 28, l'autre pôle étant dirigé vers l'extérieur. L'élément magnétique 29 est aligné axialement avec l'élément capteur 28, et décalé radialement vers l'extérieur par rapport audit élément capteur en étant monté à faible distance radiale, de manière à accroître encore la compacité du dispositif 1. L'élément magnétique 29 est apte à créer un champ magnétique qui est détecté par l'élément capteur 28, ledit champ pouvant être modifié suivant la position du galet 8 par rapport au bloc capteur 26.

Le bloc capteur 26 est également pourvu d'une carte 30 de circuit imprimé, noyée à l'intérieur du support 27 et disposée au voisinage des plots de fixations 27a, 27b, ladite carte 30 pouvant comprendre un circuit de traitement du signal émis par l'élément capteur 28. La carte 30 est reliée (non représentée) à une liaison filaire 31 apte à communiquer des informations relatives aux signaux émis par l'élément capteur 28 et traités, à un module d'alarme (non représenté) du dispositif 1. Le module d'alarme peut par exemple être réalisé sous la forme d'un voyant lumineux et/ou sonore monté au niveau du tableau de bord du véhicule automobile, afin de prévenir le conducteur de l'atteinte d'un seuil d'usure de courroie nécessitant le remplacement de ladite courroie.

Lors du montage du dispositif de galet tendeur de courroie 1, une première étape consiste à régler la tension de la courroie 8. Pour ce faire, on met en place la vis 11 sans la serrer, de façon que l'excentrique de réglage 2 soit mobile en rotation par rapport au bloc moteur 12 et au support fixe 5. On fait pivoter, au moyen d'une clef de manoeuvre coopérant avec la bague 19, l'excentrique de réglage 2 par rapport à la plaque de base 17. On amène ainsi le galet 8 en contact avec la courroie 9. On poursuit la rotation de l'excentrique de réglage 2, ce qui, par réaction de la courroie 9 sur le galet, provoque la rotation de l'excentrique de travail 3 par rapport au support 5 avec une augmentation de la tension du ressort 6, qui exerce un couple résistant entre le support 5 et l'excentrique de travail 3, tendant à repousser en permanence le galet 8 contre la courroie 9. Le dispositif est conçu pour que le galet 8 exerce sur la courroie 9 un effort générant une tension adéquate dans ladite courroie 9. On immobilise ensuite le support 5 sur le bloc moteur 12 grâce à la vis 11.

Lors du montage du dispositif 1, une portion d'extrémité 8b axiale du galet 8 est montée sensiblement en regard de l'élément capteur 28, l'entrefer entre ledit galet 8 et l'élément capteur 28 étant faible. L'élément capteur 28 détecte ainsi un premier champ magnétique créé par l'élément magnétique 29 coopérant magnétiquement avec le galet 8, avantageusement réalisé en matériau ferromagnétique, la portion d'extrémité 8b axiale du galet 8 étant soumise aux lignes de champ de l'élément magnétique 29.

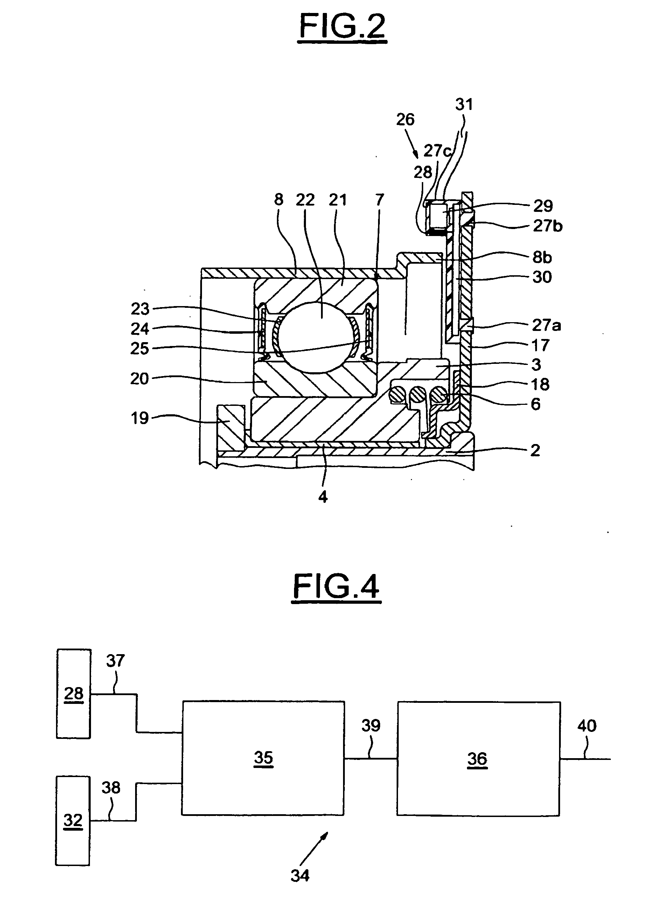

Lors d'une usure de la courroie 9, l'excentrique de travail 3, sous l'action du ressort de rappel 6, va se déplacer angulairement par rapport à l'excentrique de réglage 2 et pivoter ainsi sur ce dernier. Le galet 8, qui est monté sur l'excentrique de travail par l'intermédiaire du roulement 7, va se déplacer par rapport au support fixe 5 selon une trajectoire qui tend à modifier l'entrefer entre le galet 8 et l'élément capteur 28. L'entrefer radial entre l'élément capteur 28 et l'extrémité axiale du galet 8 va ainsi augmenter, comme illustré à la figure 2. Une telle variation d'entrefer génère ainsi une modification des lignes de champ magnétique établies initialement entre l'élément magnétique 29 et la portion d'extrémité 8b axiale du galet 8, cette modification de lignes de champ étant détectée par l'élément capteur 28. En d'autres termes, l'élément capteur 28 détecte un second champ magnétique différent du premier.

La portion d'extrémité 8b du galet 8 forme ainsi un élément cible coopérant magnétiquement avec l'élément magnétique 29, pour permettre une détection d'une usure critique de ladite courroie. En effet, il suffit de prédéfinir un entrefer correspondant au seuil d'usure critique de la courroie et à partir duquel la modification du champ magnétique détecté par l'élément capteur 28 sera exploitée par la carte 30 du dispositif comme un signal correspondant à un état d'usure prédéterminé de la courroie 9, et que le signal soit transmis au module d'alarme du dispositif, pour prévenir le conducteur.

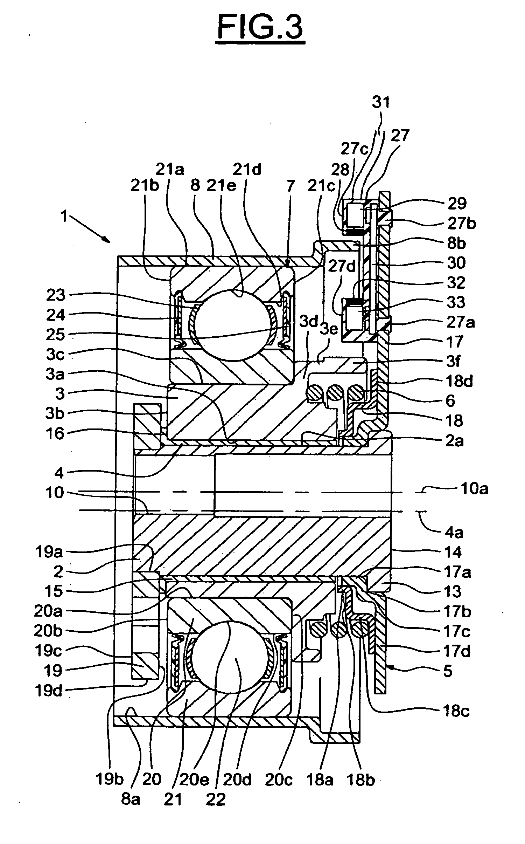

La variante de réalisation illustrée à la figure 3 diffère en ce que le support 27 comprend une deuxième extension axiale 27d s'étendant axialement en direction du roulement 7 en étant disposée radialement du côté opposé à la première extension axiale 27c, en considérant la portion d'extrémité 8b axiale du galet 8.

D'une manière analogue, un second élément capteur 32 et un second élément magnétique 33 sont montés respectivement semi-noyé et noyé à l'intérieur de l'extension axiale 27d du support 27. L'élément capteur 32, par exemple une cellule magnéto-sensible, affleure avec une surface cylindrique de grand diamètre de l'extension axiale 27d, de manière à être monté en regard de l'extrémité axiale du galet 8, du côté intérieur. L'élément magnétique 33 est du même type que l'élément magnétique 29 décrit précédemment et monté à l'intérieur de l'extension axiale 27d de façon qu'un des pôles de l'élément magnétique 33 soit orienté en direction de l'élément capteur 32, l'autre pôle étant dirigé vers l'intérieur du dispositif 1.

L'utilisation de deux éléments capteurs 28, 32 disposés radialement en regard de la portion d'extrémité 8b, respectivement du côté extérieur et du côté intérieur, permet notamment de s'affranchir de l'apparition de phénomènes parasites et d'améliorer la résolution de la mesure obtenue, par exemple en effectuant une mesure différentielle à partir des signaux délivrés par chacun des éléments capteurs 28, 32.

Sur la figure 4, est représenté un synoptique d'une unité de traitement 34 dédiée au traitement des signaux des éléments capteurs 28, 32, permettant notamment de compenser différentes variations de paramètres extérieurs, tels que la température, les propriétés magnétiques du matériau du galet sur sa périphérie, ou encore la tension d'alimentation desdits éléments capteurs.

L'unité de traitement 34 comprend un convertisseur analogique/numérique 35 et un microcontrôleur 36. Des sorties 37, 38 des éléments capteurs 28, 32 sont reliées en parallèle au convertisseur analogique/numérique 35, réalisant une conversion des signaux analogiques fournis par les éléments capteurs 29, 33 en signaux numériques. Lesdits signaux ainsi convertis sont transmis au microcontrôleur 36 par l'intermédiaire d'une sortie 39, le microcontrôleur 36 étant situé en aval du convertisseur analogique/numérique 35.

Le microcontrôleur 36 permet d'exploiter les tensions V₁ et V₂ délivrées respectivement par les éléments capteurs 28, 32 et de combiner les deux mesures réalisées pour s'affranchir des phénomènes parasites et améliorer la résolution de la mesure globale transmis par une sortie 40 reliée au microcontrôleur 36. On peut par exemple effectuer une soustraction des tensions délivrées par les éléments capteurs 28, 32 (V₁-V₂), ou effectuer un rapport entre lesdites tensions (V₁/V₂), ou encore réaliser un rapport entre la différence des tensions et la somme desdites tensions (V₁-V₂/V₁+V₂).

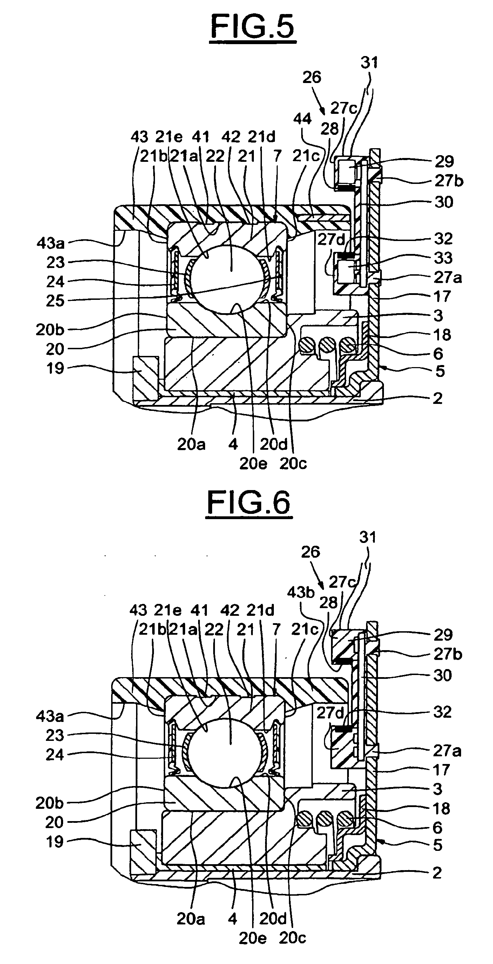

Le mode de réalisation illustré sur la figure 5 diffère en ce que le roulement 7 comprend sur sa surface cylindrique extérieure 21a deux rainures annulaires 41, 42, symétriques entre elles par rapport à un plan passant par le centre des éléments roulants 22, et en ce qu'un galet 43 est surmoulé sur la surface cylindrique extérieure 21 a de la bague 21 du roulement 7 et comprend un alésage 43a étagé. L'alésage comprend ici deux portions tronconiques (non référencées), symétriques entre elles par rapport à un plan passant par le centre des éléments roulants 22, et formant surface d'appui pour les surfaces latérales radiales 21b et 21c.

Le galet 43 est réalisé ici en matière synthétique moulée, par exemple du polyamide 6.6 chargé en fibres de verre. Un élément cible 44 est monté noyé à l'intérieur du galet 43. L'élément cible 44, par exemple un insert en matériau ferromagnétique, s'étend sensiblement axialement entre la portion tronconique en appui contre la surface radiale 21c de la bague extérieure 21 et l'extrémité axiale du galet 8, du côté du bloc support 27. Une extrémité axiale dudit insert 44 affleure avec une surface latérale radiale du galet 43. Les éléments capteurs 28 et 32 sont disposés ainsi radialement de part et d'autre de l'insert 44 formant élément cible. L'insert 44 coopére ainsi magnétiquement avec l'élément magnétique 29 pour la détection de la tension de la courroie 9 par les éléments capteurs 28 et 32.

Bien entendu, il est également envisageable de monter l'insert 44 semi-noyé à l'intérieur du galet 43, de manière que ledit insert 44 fasse saillie par rapport à une extrémité axiale du galet 43. Il est également envisageable de prévoir un insert 44, réalisé sous la forme d'un anneau ferromagnétique rapporté sur la surface axiale du galet 43, du côté du bloc support 27.

La variante de réalisation illustrée à la figure 6 diffère du mode de réalisation précédent, en ce que le galet 43, réalisé en matière synthétique moulée, est ici chargé de poudre de ferrite et est magnétisé au niveau d'une partie d'une portion d'extrémité 43b axiale du galet 43 en regard des éléments capteurs 28, 32. Les éléments capteurs 28, 32 du bloc capteur 26 sont ainsi disposés radialement de part et d'autre de la partie magnétisée de la portion d'extrémité 43b axiale.

Dans ce mode de réalisation, le bloc capteur ne comporte pas d'aimants associés aux capteurs 28, 32. C'est le galet qui émet un champ magnétique dont la valeur est détectée par les éléments capteurs 28, 32 et varie en fonction de la position dudit galet 43 par rapport au support fixe 5 se traduisant par une modification de l'entrefer dudit galet 43 par rapport aux capteurs 28, 32.

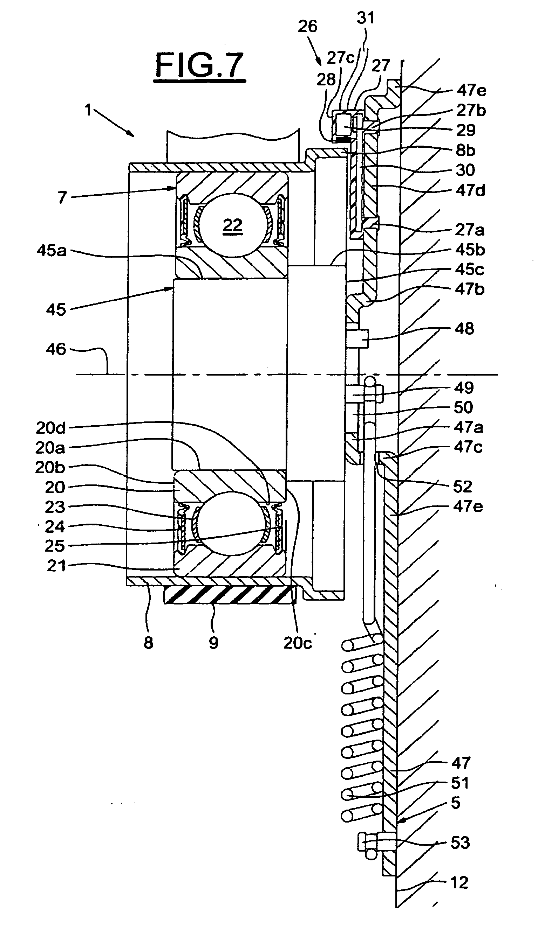

Le mode de réalisation illustré à la figure 7 diffère des modes de réalisation précédents en ce que le roulement 7 est fixé sur un moyeu support 45, d'axe 46, et en ce que le support fixe 5 comprend un plaque 47 de soutien en contact, en partie, avec le bloc moteur 12. Le moyeu 45 comprend une surface cylindrique extérieure 45 s'étendant sur la majeure partie de sa longueur et en contact avec l'alésage 20a de la bague intérieure 20 du roulement 7. La surface cylindrique extérieure 45 est prolongée radialement, du côté du bloc moteur 12, par un épaulement 45b ménageant une face d'appui pour la surface radiale 20c de la bague intérieure 20 du roulement 7. Le moyeu 45 comprend une surface radiale latérale 45c, axialement du côté de l'épaulement 45, à partir de laquelle s'étendent, axialement en direction du bloc moteur 12, des pions de guidage 48, 49. Les pions 48, 49, sensiblement cylindres, sont ici disposés chacun au voisinage de l'axe 46 géométrique du moyeu 45.

La plaque 47 de soutien comprend une portion radiale 47a, en contact avec la surface radiale latérale 45c du moyeu 45, et à l'intérieur de laquelle est ménagé un évidement en forme de fente 50 délimité radialement par deux bords droits parallèles. Les pions de guidage 48, 49 sont disposés axialement en saillie par rapport audit évidemment 50.

La portion radiale 47a est prolongée, du côté du bloc moteur 12, par des protubérances axiales 47b et 47c, diamétralement opposées et de faibles dimensions circonférentielles. Les protubérances axiales 47b et 47c sont prolongées vers l'extérieur respectivement par des première et seconde portions radiales 47d et 47e décalées axialement l'une par rapport à l'autre, la portion axiale 47e formant une semelle étant en contact avec le bloc moteur 12. Au niveau de la portion axiale 47d est monté le bloc capteur 26, ladite portion étant prolongée par une portion axiale puis par la portion radiale 47e en contact avec le bloc moteur 12.

Un actionneur, tel qu'un ressort de rappel 51, est monté entre le moyeu 45 et la plaque 47 du support fixe 5 et exerce un effort de rappel entre le moyeu 45 et le support fixe 5. Le ressort 51 s'étend à travers un évidemment circulaire 52 ménagé au niveau de la protubérance axiale 47c de la plaque 47. Une extrémité du ressort 51 est accrochée sur un pion de fixation 53 monté au niveau d'une extrémité libre de la patte axiale 47e, l'autre extrémité dudit ressort 51 étant accrochée sur le pion de guidage 49 fixé sur le moyeu 45, lesdits pions 49, 53 étant conformés à cet effet.

Lors d'une usure de la courroie 9, le moyeu 45, le roulement 7 et le galet 8, formant équipage mobile, vont se déplacer linéairement, par rapport au support fixe 5, selon une direction radiale en direction du ressort 51, le déplacement desdits éléments étant guidés par l'intermédiaire des pions 48, 49 coulissant à l'intérieur de l'évidemment 50. L'entrefer radial entre l'élément capteur 28 et l'extrémité axiale du galet 8 va ainsi augmenter générant ainsi une modification des lignes de champ magnétique établies initialement entre l'élément magnétique 29 et la portion d'extrémité 8b axiale du galet 8.

Le dispositif permet ainsi, en fonctionnement, de récupérer des signaux correspondant à la tension de la courroie afin de déterminer un état d'usure de ladite courroie, de manière particulièrement fiable et précise, en exploitant directement le déplacement du galet par rapport à un support fixe du dispositif.

## Revendications

1. Dispositif de galet tendeur de courroie (9) pourvu d'un support fixe (5) apte à assurer le maintien du dispositif sur un bloc moteur, d'un équipage mobile par rapport au support fixe (5), d'un galet tournant (8 ; 43) supporté par l'équipage mobile et destiné à être en contact avec la courroie, et d'un organe apte à exercer un effort permanent entre le support fixe et l'équipage mobile, **caractérisé en ce que** le galet tournant comprend un élément cible, le support fixe (5) comprenant au moins un élément capteur (28) monté en regard de l'élément cible du galet (8 ; 43) avec un entrefer et coopérant avec ledit élément cible pour la détection de l'usure de la courroie en fonction d'un déplacement du galet tournant par rapport au support fixe.

2. Dispositif selon la revendication 1, **caractérisé en ce que** le support fixe comprend, en outre, au moins un élément magnétique (29) apte à créer un champ magnétique à proximité de l'élément capteur, ledit élément magnétique coopérant avec l'élément cible du galet pour modifier la valeur du champ magnétique en fonction du déplacement du galet par rapport au support fixe.

3. Dispositif selon la revendication 1 ou 2, **caractérisé en ce que** l'entrefer est variable en fonction du déplacement du galet par rapport au support fixe.

4. Dispositif selon l'une quelconque des revendications précédentes, **caractérisé en ce que** le support fixe comprend deux éléments capteurs (28, 32) disposés radialement de part et d'autre de l'élément cible du galet, les éléments capteurs étant reliés électriquement de manière à effectuer une mesure différentielle des signaux fournis par les capteurs.

5. Dispositif selon l'une quelconque des revendications précédentes, **caractérisé en ce** l'élément capteur (28) détecte l'usure de la courroie (9) en fonction d'un déplacement linéaire radial de l'équipage mobile par rapport au support fixe.

6. Dispositif selon l'une quelconque des revendications précédentes, **caractérisé en ce que** l'équipage mobile comprend un excentrique de travail (3) mobile angulairement par rapport au support fixe (5) et supportant le galet, l'élément capteur détectant l'usure de la courroie (9) en fonction de la position d'un élément supportant le galet par rapport au support fixe.

7. Dispositif selon l'une quelconque des revendications précédentes, **caractérisé en ce que** le support fixe comprend une plaque (17 ; 47) sur laquelle est monté l'élément capteur.

8. Dispositif selon l'une quelconque des revendications précédentes, **caractérisé en ce que** l'élément cible comprend un matériau ferromagnétique.

9. Dispositif selon l'une quelconque des revendications précédentes, **caractérisé en ce qu'**une portion d'extrémité (8b ; 43b) du galet forme l'élément cible.

10. Dispositif selon l'une quelconque des revendications précédentes, **caractérisé en ce que** l'élément cible est rapporté ou monobloc avec l'équipage mobile.

11. Dispositif selon l'une quelconque des revendications précédentes, **caractérisé en ce que** l'élément cible comprend un matériau synthétique chargé de poudre de ferrite magnétisée.

12. Dispositif selon l'une quelconque des revendications 2 à 11, **caractérisé en ce qu'**il comprend un bloc capteur (26), monté sur le support fixe, et à l'intérieur duquel est noyé l'élément magnétique (29) et logé au moins en partie l'élément capteur (28).

13. Dispositif selon l'une quelconque des revendications précédentes, **caractérisé en ce que** l'élément capteur comprend une cellule magnétosensible linéaire ou digitale.

14. Procédé de contrôle de l'usure d'une courroie comprenant les étapes au cours desquelles on exerce un effort de tension permanent entre un support fixe et un équipage mobile par rapport au support fixe et en contact avec la courroie, **caractérisé en ce qu'**on détecte l'usure de la courroie directement en fonction d'un déplacement du galet tournant par rapport au support fixe.

## Claims

1. Belt (9) tensioner roller device provided with a fixed support (5) able to hold the device on an engine block, with moving parts that can move with respect to the fixed support (5), with a rotary roller (8; 43) supported by the moving parts and intended to be in contact with the belt, and with a component able to exert a permanent force between the fixed support and the moving parts, **characterized in that** the rotary roller comprises a target element, the fixed support (5) comprising at least one sensor element (28) mounted facing the target element of the roller (8; 43) with a gap and collaborating with the said target element to detect belt wear as a function of displacement of the rotary roller with respect to the fixed support.

2. Device according to Claim 1, **characterized in that** the fixed support further comprises at least one magnetic element (29) able to create a magnetic field near the sensor element, the said magnetic element collaborating with the target element of the roller to modify the value of the magnetic field as a function of the displacement of the roller relative to the fixed support.

3. Device according to Claim 1 or 2, **characterized in that** the gap can vary as a function of the displacement of the roller relative to the fixed support.

4. Device according to any one of the preceding claims, **characterized in that** the fixed support comprises two sensor elements (28, 32) positioned radially on either side of the target element of the roller, the sensor elements being electrically connected in such a way as to take a differential measurement of the signals supplied by the sensors.

5. Device according to any one of the preceding claims, **characterized in that** the sensor element (28) detects belt (9) wear as a function of a radial linear displacement of the moving parts with respect to the fixed support.

6. Device according to any one of the preceding claims, **characterized in that** the moving parts comprise a working eccentric (3) that can move angularly relative to the fixed support (5) and supports the roller, the sensor element detecting belt (9) wear as a function of the position of an element supporting the roller relative to the fixed support.

7. Device according to any one of the preceding claims, **characterized in that** the fixed support comprises a plate (17; 47) on which the sensor element is mounted.

8. Device according to any one of the preceding claims, **characterized in that** the target element comprises a ferromagnetic material.

9. Device according to any one of the preceding claims, **characterized in that** an end portion (8b; 43b) of the roller forms the target element.

10. Device according to any one of the preceding claims, **characterized in that** the target element is attached to or integral with the moving parts.

11. Device according to any one of the preceding claims, **characterized in that** the target element comprises a synthetic material filled with magnetized ferrite powder.

12. Device according to any one of Claims 2 to 11, **characterized in that** it comprises a sensor unit (26), mounted on the fixed support, and in which the magnetic element (29) is embedded and the sensor element (28) is at least partially housed.

13. Device according to any one of the preceding claims, **characterized in that** the sensor element comprises a linear or digital magnetosensitive cell.

14. Method for monitoring belt wear comprising the steps during which a permanent tensile force is exerted between a fixed support and moving parts that can move with respect to the fixed support and that are in contact with the belt, **characterized in that** belt wear is detected directly as a function of displacement of the rotary roller relative to the fixed support.

## Patentansprüche

1. Spannrollenvorrichtung für einen Riemen (9), der mit einer festen Abstützung (5), die geeignet ist, den Halt der Vorrichtung an einem Motorblock zu gewährleisten, einer gegenüber der festen Abstützung (5) beweglichen Einrichtung, einer Drehrolle (8;43), die durch die bewegliche Einrichtung gehalten und dazu bestimmt ist, sich in Kontakt mit dem Riemen zu befinden, und Mitteln versehen ist, die geeignet sind, eine dauerhafte Last zwischen der festen Abstützung und der beweglichen Einrichtung auszuüben, **dadurch gekennzeichnet, dass** die Drehrolle ein Zielelement aufweist, wobei die feste Abstützung (5) wenigstens ein Sensorelement (28) aufweist, das in Bezug auf das Zielelement der Drehrolle (8;43) mit einem Spalt montiert ist und mit diesem Zielelement zur Erfassung des Verschleißes des Riemens als Funktion einer Verlagerung der Drehrolle in Bezug auf die feststehende Abstützung zusammenwirkt.

2. Vorrichtung nach Anspruch 1, **dadurch gekennzeichnet, dass** die feststehende Abstützung weiterhin wenigstens ein Magnetelement (29) aufweist, das geeignet ist, ein Magnetfeld in der Nähe des Sensorelements zu erzeugen, wobei das Magnetelement mit dem Zielelement der Rolle zum Verändern des Wertes des Magnetfeldes als Funktion der Verlagerung der Rolle in Bezug auf die feste Abstützung zusammenwirkt.

3. Vorrichtung nach Anspruch 1 oder 2, **dadurch gekennzeichnet, dass** der Spalt als Funktion der Verlagerung der Rolle in Bezug auf die feste Abstützung variabel ist.

4. Vorrichtung nach einem der vorhergehenden Ansprüche, **dadurch gekennzeichnet, dass** die feste Abstützung zwei Sensorelemente (28,32) aufweist, die radial auf beiden Seiten des Zielelements der Rolle angeordnet sind, wobei die Sensorelemente in einer Weise zum Bewirken einer Differentialmessung der durch die Sensoren erzeugten Signale elektrisch verbunden sind.

5. Vorrichtung nach einem der vorhergehenden Ansprüche, **dadurch gekennzeichnet, dass** das Sensorelement (28) den Verschleiß des Riemens (9) als eine Funktion einer linearen radialen Verlagerung der beweglichen Einrichtung in Bezug auf die feste Abstützung erfasst.

6. Vorrichtung nach einem der vorhergehenden Ansprüche, **dadurch gekennzeichnet, dass** die bewegliche Einrichtung einen in Winkelrichtung in Bezug auf die feste Abstützung (5) beweglichen Arbeitsexzenter (3) aufweist, der die Rolle hält, wobei das Sensorelement den Verschleiß des Riemens (9) als eine Funktion der Position eines die Rolle in Bezug auf die feste Abstützung haltenden Elements erfasst.

7. Vorrichtung nach einem der vorhergehenden Ansprüche, **dadurch gekennzeichnet, dass** die feste Abstützung eine Platte (17;47) aufweist, an welcher das Sensorelement montiert ist.

8. Vorrichtung nach einem der vorhergehenden Ansprüche, **dadurch gekennzeichnet, dass** das Zielelement ferromagnetisches Material enthält.

9. Vorrichtung nach einem der vorhergehenden Ansprüche, **dadurch gekennzeichnet, dass** ein Randbereich (8b;43b) der Rolle das Zielelement bildet.

10. Vorrichtung nach einem der vorhergehenden Ansprüche, **dadurch gekennzeichnet, dass** das Zielelement an der beweglichen Einrichtung angefügt oder einstückig mit dieser ausgebildet ist.

11. Vorrichtung nach einem der vorhergehenden Ansprüche, **dadurch gekennzeichnet, dass** das Zielelement ein synthetisches Material enthält, das mit Pulver aus magnetisiertem Ferrit befüllt ist.

12. Vorrichtung nach einem der Ansprüche 2 bis 11, **dadurch gekennzeichnet, dass** sie eine Sensoreinheit (26) aufweist, die an der festen Abstützung montiert ist, und an deren Innenseite das Magnetelement (29) eingelassen ist und wenigstens für einen Teil des Sensorelements (28) Platz vorgesehen ist.

13. Vorrichtung nach einem der vorhergehenden Ansprüche, **dadurch gekennzeichnet, dass** das Sensorelement eine linear oder digital magnetempfindliche Zelle aufweist.

14. Verfahren zur Überwachung des Verschleißes eines Riemens, umfassend Schritte, im Verlaufe derer man eine dauerhafte Spannungsbeanspruchung zwischen einer festen Abstützung und einer Einrichtung ausübt, die in Bezug auf die feste Abstützung beweglich ist und sich in Kontakt mit dem Riemen befindet, **dadurch gekennzeichnet, dass** man den Verschleiß des Riemens unmittelbar als eine Funktion der Verlagerung der Drehrolle in Bezug auf die feste Abstützung erfasst.
